# EUROPEAN PATENT APPLICATION

(11) **EP 4 542 367 A1**
(43) Date of publication of application: **23.04.2025**
(21) Application number: 23834573.0
(22) Date of filing: 06.06.2023
(51) Int. Cl.: G06F 3/14

(54) **METHOD AND DEVICE FOR PROCESSING REMOTE SHARING OF DISPLAY SCREEN, AND STORAGE MEDIUM**

(30) Priority: 05.07.2022 CN 202210785265
(71) Applicant: ZTE CORPORATION, Shenzhen, Guangdong 518057 (CN)
(72) Inventor: LIANG, Yansen, Shenzhen, Guangdong 518057 (CN); DAI, Ruilin, Shenzhen, Guangdong 518057 (CN)
(74) Representative: Ziebig Hengelhaupt Intellectual Property Attorneys Patentanwaltskanzlei PartGmbB
(86) International application number: PCT/CN2023/098568
(87) International publication number: WO 2024/007799

(57) **Abstract**

The present disclosure relates to the technical field of multimedia, and provides a method and device for processing remote sharing of a display screen, and a storage medium. The method comprises: in response to a first operation of a user selecting a display screen area, determining a screen sharing area corresponding to the first operation, wherein the screen sharing area describes an area of a display screen shared by a sending end to a remote terminal, and the screen sharing area is a subset of the display screen of the sending end; acquiring, according to the screen sharing area, an auxiliary stream corresponding to the screen sharing area, wherein the auxiliary stream is a screen sharing stream; and sending the auxiliary stream to the remote terminal, such that the remote terminal displays, according to the auxiliary stream, the screen sharing area corresponding to the auxiliary stream.

## Description

### CROSS-REFERENCE TO RELATED APPLICATION(S)

The present disclosure claims a priority to Chinese Patent Application No. CN202210785265.1, filed on July 5, 2022, entitled "method and device for processing remote sharing of a display screen, and storage medium", which is incorporated herein by reference in its entirety.

### TECHNICAL FIELD

The present disclosure relates to the field of multimedia technology, and in particular to a processing method and processing device for display screen remote sharing, and a storage medium.

### BACKGROUND

Remote sharing of a display screen (which may also be referred to as remote interaction of a display screen) may be sharing and interaction between display screens of two terminals or more than two terminals. Remote interaction of a screen may be screen sharing between screens of different terminals, or remote operation by one terminal on the screen of another terminal, where a terminal whose screen is shared may be referred to as a sending end or a sharing end, and correspondingly, a terminal that shares a screen of a remote terminal may be referred to as a receiving end or a control end. However, there is a technical problem of information insecurity in display screen remote sharing in related art.

### SUMMARY

The present disclosure provides a processing method and processing device for display screen remote sharing, and a storage medium.

In a first aspect, the present disclosure provides a processing method for display screen remote sharing, including: in response to a first operation of a user to select a display screen area, determining a screen sharing area corresponding to the first operation, where the screen sharing area is used to describe an area of a display screen shared by a sending end to a remote terminal, and the screen sharing area is a subset of the display screen of the sending end; collecting a substream corresponding to the screen sharing area according to the screen sharing area, where the substream is a screen sharing stream; and sending the substream to the remote terminal, so that the remote terminal displays the screen sharing area corresponding to the substream according to the substream.

In a second aspect, the present disclosure further provides a processing device for display screen remote sharing, where the processing device for display screen remote sharing includes a processor, a memory, a computer program stored on the memory and executable by the processor, and a data bus for realizing connection and communication between the processor and the memory, where when the computer program is executed by the processor, any processing method for display screen remote sharing provided by the specification of the present disclosure is implemented.

In a third aspect, the present disclosure further provides a storage medium for computer readable storage, where the storage medium stores one or more programs, and the one or more programs are executable by one or more processors to implement any processing method for display screen remote sharing provided by the specification of the present disclosure.

### BRIEF DESCRIPTION OF THE DRAWINGS

In order to describe technical solutions in embodiments of the present disclosure more clearly, the accompanying drawings to be used in the description of embodiments will be introduced briefly. Obviously, the accompanying drawings to be described below are some embodiments of the present disclosure, and a person of ordinary skill in the art may obtain other drawings according to these drawings without paying any creative effort.
FIG. 1 is a schematic flowchart of a processing method for display screen remote sharing provided by the embodiments of the present disclosure.
FIG. 2 is a schematic diagram of a screen sharing area of a processing method for display screen remote sharing provided by the embodiments of the present disclosure.
FIG. 3 is a first schematic sub-flowchart of a processing method for display screen remote sharing provided by the embodiments of the present disclosure.
FIG. 4 is an exemplary diagram of a sharing screen controllable area of the processing method for display screen remote sharing provided by the embodiments of the present disclosure.
FIG. 5 is a second schematic sub-flowchart of a processing method for display screen remote sharing provided by the embodiments of the present disclosure.
FIG. 6 is a third schematic sub-flowchart of a processing method for display screen remote sharing provided by the embodiments of the present disclosure.
FIG. 7 is a structural schematic block diagram of a processing device for display screen remote sharing provided by the embodiments of the present disclosure.

### DETAILED DESCRIPTION

The technical solutions in the embodiments of the present disclosure will be described clearly and completely with reference to the accompanying drawings in the embodiments of the present disclosure. Obviously, the described embodiments are merely some but not all of embodiments of the present disclosure. All other embodiments obtained based on the embodiments of the present disclosure by a person of ordinary skill in the art without paying any creative effort shall be included in the protection scope of the present disclosure.

The flowcharts shown in the accompanying drawings are only exemplary explanations and do not necessarily include all contents and operations/steps, nor do they necessarily have to be executed in the described order. For example, some operations/steps may be decomposed, combined or partially merged, so the actual execution order may change according to actual circumstances.

It should be understood that the terminology used in the specification of the present disclosure is for the purpose of describing specific embodiments only and is not intended to limit the present disclosure herein. As used in the specification of the present disclosure and the appended claims, the singular forms "a", "an", and "the" are intended to include the plural forms as well, unless the context clearly indicates otherwise.

Display screen remote sharing (which may also be referred to as remote interaction of a display screen) may be sharing and interaction between display screens of two terminals or more than two terminals. Remote interaction of a screen may be screen sharing between screens of different terminals, or remote operation by one terminal on the screen of another terminal, where a terminal whose screen is shared may be referred to as a sending end or a sharing end, and correspondingly, the terminal that shares a screen of a remote terminal may be referred to as a receiving end or a control end. For example, in a remote conference, remote interaction of a screen is generally adopted to enable a same video frame to be shared between different terminals. However, traditional screen remote interaction generally only supports an entire screen of an end as an interactive unit, that is, a visible area of a screen is an interactive area of the screen, and there is a lack of restrictions on the interactive area. When there is information that is not suitable for sharing on the screen of the sending end, or when the sending end is remotely controlled by other ends, all information of the sending end will be exposed to the remote control end. In the two cases above, there is a risk of exposing information of the sending end that is not suitable for sharing, and the information security of the sending end cannot be guaranteed.

The embodiments of the present disclosure provide a method, an apparatus, a system, a device, and a storage medium for processing display screen remote sharing. Herein, the processing method may be applied to a mobile terminal, which may be an electronic device, such as a smart phone, a smart watch, a tablet computer, a laptop computer, a desktop computer, a personal digital assistant, and a wearable device. In a business scenario where display screen remote sharing is performed by a plurality of terminals, the processing method for display screen remote sharing provided by the embodiment of the present disclosure may be adopted for interaction. For example, upon interacting with the display screens of a plurality of terminals, such as a remote conference, a remote guidance of a customer service system, an interaction of online education, a remote office scenario of multi-terminal interaction, a multi-person video chat or a multi-person game, the processing method for display screen remote sharing provided by the embodiments of the present disclosure may be adopted to realize sharing of the display screen selected by the sending end.

In the face of remote sharing and interaction of display screens between different terminals, based on the risk of exposure of information that is not suitable for sharing at the sending end in traditional technologies, the inventor proposes a processing method for display screen remote sharing of the embodiments of the present disclosure. The core idea of the embodiments of the present disclosure is: when a plurality of terminals perform display screen sharing, the sending end selects a screen sharing area within the display screen, so that the display screen may be controllably divided into a screen sharing area and a non-screen sharing area, and the screen sharing area is mapped to a remote terminal for sharing, while the non-screen sharing area is not shared with the remote terminal, thereby capable of flexibly determining whether to share the entire display screen and the size of the sharing range, and further improving the flexibility of setting the screen sharing area. Since the sending end may select a subset of the display screen as the screen sharing area, the sending end may controllably share a part of the display screen with the remote terminal, and the entire display screen of the sending end may be used as a screen sharing unit, thus the restriction of the screen sharing area may be realized, so that only information on the screen sharing area is shared, and the security of information outside the screen sharing area of the sending end is guaranteed.

Some embodiments of the present disclosure will be explained in detail with reference to the accompanying drawings below. In non-conflicting situations, the following embodiments and features thereof may be combined with each other.

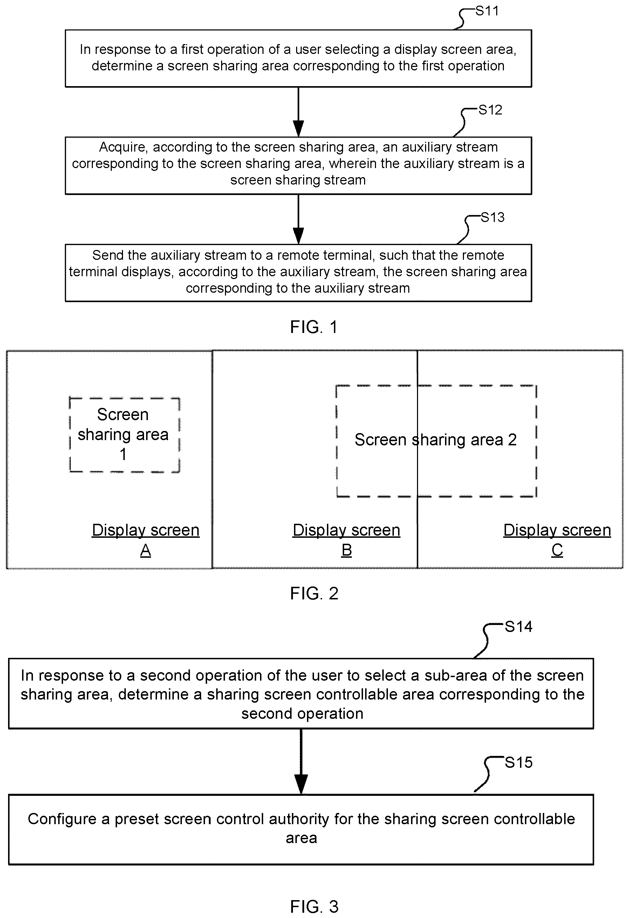

Please refer to FIG. 1 and FIG. 2. FIG. 1 is a schematic flowchart of a processing method for display screen remote sharing provided by the embodiments of the present disclosure, and FIG. 2 is a schematic diagram of a screen sharing area of the processing method for display screen remote sharing provided by the embodiments of the present disclosure. In a multi-terminal interactive display screen remote sharing scenario, a sending end that sends a screen sharing area, and a remote terminal (i.e., a receiving end) that receives the screen sharing area are contained. There may be a plurality of remote terminals. The processing method for display screen remote sharing provided by the embodiments of the present disclosure is applied to the sending end. As shown in FIG. 1, the method includes the following steps S11 to S13.

In S11, in response to a first operation of a user to select a display screen area, a screen sharing area corresponding to the first operation is determined, where the screen sharing area is used to describe an area of a display screen shared by a sending end to a remote terminal, and the screen sharing area is a subset of the display screen of the sending end.

Herein, the display screen is a screen of the terminal device used to display a content. The display screen may use a single display screen (i.e., a single screen) as a screen for displaying a content, or the display screen may use a plurality of display screens (i.e., a plurality of screens) as a screen for displaying a content. The display screen is the visible area.

In an exemplary embodiment, during an implementation of display screen remote sharing, two types of terminals are included. One is a local terminal, which is a provider of the sharing display screen and may be referred to as a sending end of the sharing display screen, and may also be referred to as a sharing end. The other is a remote terminal, which is used to receive the sharing display screen sent from the sending end. The remote terminal may also be referred to as a receiving end of a sharing display screen. There may be a plurality of receiving ends, and the receiving ends may be different terminals at different locations. For each terminal, and further, for the display screen of the sending end for example, a single screen or multiple screens may be adopted. For a display screen with a single screen, device coordinates on the screen are referred to as screen coordinates, which are represented by pixels. For a display screen with multiple screens, one of the display screens is determined as a main screen, and the remaining display screen(s) is/are secondary screen(s) or sub-screen(s) described in sequence. Taking the screen coordinates of the main screen as the reference, the coordinates of each sub-screen are determined according to the positions of the secondary screen and the main screen in sequence, so as to obtain screen coordinates of the multiple screens.

When display screen remote sharing is performed, a user may select an area on the display screen as a screen sharing area by dragging or clicking the mouse, or the user may select an area as a screen sharing area by setting the screen coordinates of the display screen. The screen sharing area is used to describe the area of the display screen shared by the sending end to the remote terminal. The screen sharing area is a subset of the display screen of the sending end, i.e., the screen sharing area may be the entire display screen or a partial area of the display screen. For a display screen with a single display screen, the screen sharing area may be the entire display area of the single display screen, or the screen sharing area may be a partial display area of the single display screen. For a display screen with a plurality of display screens, the display screen may be a display area of a single display screen, or may be a display area across display screens. For example, referring to FIG. 2, for a display screen containing display screen A, display screen B, and display screen C, the screen sharing area may be a display area corresponding to a single display screen or a partial area therein, and is a partial area within display screen A as shown in screen sharing area 1. The screen sharing area may also be a display area across display screens, and is a display area across display screen B and display screen C as shown in screen sharing area 2, and screen sharing area 2 contains a partial area of each of display screen B and display screen C.

In response to the first operation of the user to select a display screen area, at least two screen coordinates on the display screen corresponding to the first operation are determined, and all the screen coordinates are connected to obtain an area surrounded by a plurality of screen coordinates, i.e., the screen sharing area, where the screen sharing area is used to describe an area of the display screen shared by the sending end to the remote terminal, and the screen sharing area is a subset of the display screen of the sending end. For example, taking the manner of dragging the mouse on the display screen to select the screen area as an example, based on the screen coordinate of the display screen, a starting screen coordinate and an ending screen coordinate corresponding to the first operation are monitored, and a rectangular area may be determined according to the starting screen coordinate and the ending screen coordinate, and the rectangular area is the screen sharing area corresponding to the first operation. Herein, selecting the screen may be defined in executable programs, function groups, module pools (Executable programs, Function groups, Module pools) type programs, and is defined in the global declaration area of the program by SELECT-OPTIONS, SELECTION-SCREEN and PARAMETERS statements.

In S12, a substream corresponding to the screen sharing area is collected according to the screen sharing area, where the substream is a screen sharing stream.

Herein, the auxiliary stream (Substream) is an uplink video stream opened separately for screen sharing. For example, in the multi-terminal remote interaction scenarios such as a multi-person video chat, an online conference, and other online education scenarios, two video streams need to be sent simultaneously: one is the camera stream, and the other is the screen sharing stream. The screen sharing stream is the substream, which refers to the second video stream and is generally used for screen sharing.

In an exemplary embodiment, after the screen sharing area is determined, the substream corresponding to the screen sharing area is collected based on the screen coordinates of the screen sharing area. For example, the video stream corresponding to the screen coordinates of the screen sharing area may be directly collected to obtain the substream according to the screen coordinates of the screen sharing area. The video stream of the display screen may also be collected in advance, and the video stream of the screen sharing area may be filtered out from the video stream of the display screen according to the position of the screen coordinates of the screen sharing area in all the screen coordinates of the display screen to obtain the substream.

In S13, the substream is sent to the remote terminal, so that the remote terminal displays the screen sharing area corresponding to the substream according to the substream.

In an exemplary embodiment, after the substream corresponding to the screen sharing area is obtained, the substream is sent to the remote terminal. The remote terminal displays the screen sharing area corresponding to the substream according to the substream, thereby mapping the screen sharing area from the sending end to the remote terminal. The remote terminal shares the display screen of the sending end based on the screen sharing area.

In the embodiments of the present disclosure, when a plurality of terminals perform display screen sharing, the display screen of the sending end may be selected to obtain a screen sharing area, so that the display screen may be controllably divided into a screen sharing area and a non-screen sharing area, and the screen sharing area is mapped to the remote terminal for sharing, while the non-screen sharing area is not shared with the remote terminal, thereby capable of flexibly determining whether to share the entire display screen and the size of the sharing range, and further, improving the flexibility of setting the screen sharing area, and realizing controllable and flexible remote sharing of a part of the display screen. Since the sending end may select a subset of the display screen as the screen sharing area and controllably share a part of the display screen with the remote terminal, the entire screen of the sending end may be not used as a sharing unit, thus the restriction on the screen sharing area is realized, so that only information on the screen sharing area is shared and only necessary information is shared, and the security of information outside the screen sharing area of the sending end is guaranteed.

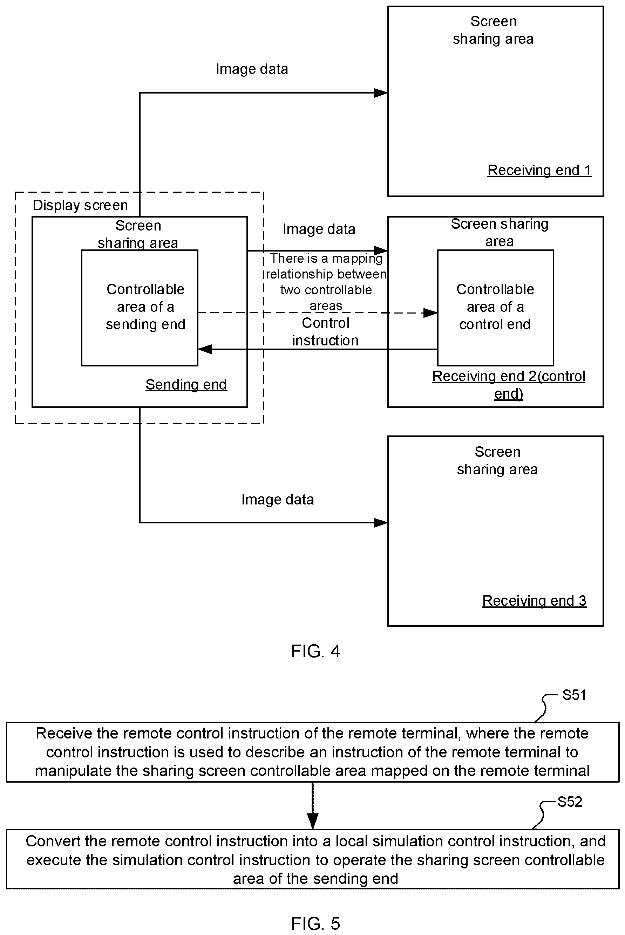

In an embodiment, please refer to FIG. 3 and FIG. 4. FIG. 3 is a first schematic sub-flowchart of a processing method for display screen remote sharing provided by the embodiments of the present disclosure, and FIG. 4 is an exemplary diagram of a sharing screen controllable area of the processing method for display screen remote sharing provided by the embodiments of the present disclosure. As shown in FIG. 3, in this embodiment, after the screen sharing area corresponding to the first operation is determined, the processing method for display screen remote sharing further includes S14 to S15.

In S14, in response to a second operation of the user to select a sub-area of the screen sharing area, a sharing screen controllable area corresponding to the second operation is determined, where the sharing screen controllable area is used to describe an area where the remote terminal is capable of operating in the screen sharing area, and the sharing screen controllable area is a subset of the screen sharing area.

In S15, a preset screen control authority is configured for the sharing screen controllable area, where the preset screen control authority is used to describe an authority of the sending end to allow the remote terminal to operate in the sharing screen controllable area.

In an exemplary embodiment, when a user sets an area that a remote terminal may control within a screen sharing area, the user selects a sub-area within the screen sharing area, and the operation of the user to select the sub-area is a second operation. In response to the second operation of the user to select the sub-area of the screen sharing area, the sending end determines a range of the screen coordinate corresponding to the sub-area of the screen sharing area selected by the user, and takes the sub-area of the screen sharing area as a sharing screen controllable area, where the sharing screen controllable area is used to describe an area where the remote terminal may operate within the screen sharing area, and a preset screen control authority is used to describe an authority that the sending end allows the remote terminal to operate in the sharing screen controllable area, that is, an authority that the sending end allows the remote terminal to operate in the sharing screen controllable area of the sending end, and the sharing screen controllable area is a subset of the screen sharing area. The second operation is similar to the first operation. After the user determines the size of the sharing screen controllable area, the sending end then associates the preset screen control authority with the sharing screen controllable area, thereby configuring the preset screen control authority for the sharing screen controllable area, so that the sharing screen controllable area has the authority to be controlled by the remote terminal. The preset screen control authority includes the authority of the remote terminal to operate the sharing screen controllable area through input devices such as a mouse or a keyboard, while the display area other than the sharing screen controllable area and in the screen sharing area does not have the authority to be controlled by the remote terminal, and cannot be controlled by the remote terminal. Herein, the preset screen control authority is used to describe the authority of the remote terminal to operate the sharing screen controllable area. Please refer to FIG. 4, as shown in FIG. 4, a local sending end and a remote terminal are included in the example shown in FIG. 4. The remote terminal includes a receiving end 1, a receiving end 2 and a receiving end 3, where the receiving end 2 is also a control end, that is, the receiving end 2 is also a terminal that controls the sharing screen controllable area of the sending end. After the screen sharing area is determined based on the first operation on the display screen of the sending end, a controllable area of the sending end (i.e., the sharing screen controllable area) is determined based on the second operation of the user in the screen sharing area, and then the controllable area is associated with the preset screen control authority, so as to configure the preset screen control authority for the controllable area, so that the controllable area has the authority to be controlled by the remote terminal, and other display area(s) in the screen sharing area and other than the controllable area do(es) not have the authority to be controlled by the remote terminal, cannot be controlled by the remote terminal, and may only display video images, thereby limiting the necessary control of the remote terminal on the sharing screen.

In the embodiments of the present disclosure, a sharing screen controllable area that may be controlled by a remote terminal is set in the screen sharing area, thereby further dividing the screen sharing area into a controllable area of a sharing screen and a non-controllable area of a sharing screen. The sharing screen controllable area may be controlled by the remote terminal, while the non-controllable area of the sharing screen cannot be controlled by the remote terminal, so that the sharing visible area and the controllable area for the remote terminal may not be completely consistent, thereby being able to flexibly determine whether to make the entire screen sharing area controllable and the size of the controllable range, thereby improving the flexibility of setting the sharing screen controllable area, and realizing controllable and flexible partial remote control of the sharing screen controllable area, which may flexibly adapt to the actual needs of various application scenarios. Since the sending end may select the subset of the screen sharing area as the sharing screen controllable area, and is controllably partially controllable with the remote terminal for the display screen, so that the entire screen sharing area may be not considered as a controllable unit to realize the restriction of the operation of the remote terminal in the screen sharing area, thereby only allowing the remote terminal to operate on the sharing screen controllable area, which may further guarantee the security of information outside the sharing screen controllable area of the sending end.

In an exemplary embodiment, after the sharing screen controllable area corresponding to the second operation is determined, the method further includes: marking the sharing screen controllable area in a preset marking manner.

In an exemplary embodiment, after the sharing screen controllable area corresponding to the second operation is determined, a preset marking manner may be adopted to mark and display the sharing screen controllable area, and map the sharing screen controllable area to the remote terminal. Since the sharing screen controllable area of the sending end and the sharing screen controllable area of the control end are in a mapping relationship, when the remote terminal displays the sharing screen controllable area, the sharing screen controllable area will be marked and displayed in a same preset marking manner, and the sharing screen controllable area will be prominently displayed on the display screen of the remote terminal, so that the user of the remote terminal may clearly know the screen area of the remote controllable operation. The preset marking manner includes displaying a border of the sharing screen controllable area prominently, or displaying an entire area of the sharing screen controllable area prominently. The prominent displaying manner may adopt at least one of the following manners: bolding the border, highlighting the border, displaying the line format of the border in a broken line or a dot format, using a color of the border different from that of other areas, and displaying the entire area of the sharing screen controllable area prominently, and taking a color of the entire area of the controllable area different from that of other areas. For example, please continue to refer to FIG. 4, the controllable area of the sending end is mapped to the receiving end 2 (i.e., the control end). When the control end displays the controllable area shared by the sending end (i.e., the controllable area of the control end), the border of the controllable area of the control end may be highlighted for display. For example, the border of the controllable area of the control end may be bolded, highlighted, or displayed in a color different from other areas of the screen prominently, or the entire area of the controllable area of the control end may be highlighted or displayed in a color different from other regions prominently.

In the embodiments of the present disclosure, a preset marking manner is adopted to mark and display the sharing screen controllable area on the remote terminal, so that the sharing screen controllable area is different from other areas of the same screen for displaying prominently, so that the user of the remote terminal may clearly know the screen range for remote controllable operations, thereby improving the operational convenience of the sharing screen controllable area and the control efficiency of the controllable operations.

In an exemplary embodiment, after the preset screen control authority is configured for the sharing screen controllable area, the method further includes: granting the screen control authority of the sharing screen controllable area to the remote terminal, and mapping the sharing screen controllable area to the remote terminal.

In an exemplary embodiment, during the procedure of display screen remote sharing by a plurality of terminals, after the sending end determines the sharing screen controllable area, the screen control authority of the sharing screen controllable area may be granted to the remote terminal (i.e., the control end) by the sending end to specify a remote terminal, or by the remote terminal to apply for the screen control authority of the sharing screen controllable area and confirming the application by the sending end. At the same time, the sharing screen controllable area is mapped to the control end, so that the control end may perform a control operation on the sharing screen controllable area based on the mapped sharing screen controllable area. In the embodiments of the present disclosure, the screen control authority of the sharing screen controllable area is granted to the remote terminal, and the sharing screen controllable area is mapped to the control end, so that the control end may control the sharing screen controllable area, thereby restricting the controllable operation of the control end on the display screen of the sending end within the sharing screen controllable area, thereby guaranteeing the security of information outside the sharing screen controllable area of the sending end.

In an embodiment, please refer to FIG. 5, FIG. 5 is a second schematic sub-flowchart of a processing method for display screen remote sharing provided by the embodiments of the present disclosure. As shown in FIG. 5, in this embodiment, after the sharing screen controllable area is mapped to the remote terminal, the processing method for display screen remote sharing further includes S51 to S52. In S51, the remote control instruction of the remote terminal is received, where the remote control instruction is used to describe an instruction of the remote terminal to manipulate the sharing screen controllable area mapped on the remote terminal. In S52, the remote control instruction is converted into a local simulation control instruction, where the simulation control instruction is executed to operate the sharing screen controllable area of the sending end.

In an exemplary embodiment, the remote terminal acquires a control authority of a sharing screen controllable area, and after the sharing screen controllable area is mapped on the display screen thereof, the sharing screen controllable area mapped on the remote terminal may be manipulated by input manners of terminal devices such as a gesture, voice, a mouse, or a keyboard. Correspondingly, the remote control instruction of the sharing screen controllable area is generated, and the remote control instruction is returned to the sending end. The sending end receives the remote control instruction and converts the remote control instruction into a local simulation control instruction, such as simulating the mouse control instruction of the remote terminal into local mouse control instruction, simulating the keyboard control instruction of the remote terminal into a local keyboard control instruction, etc., and executes the simulation control instruction, which is equivalent to the control operation of an input device such as a local keyboard or a local mouse on the sharing screen controllable area, thereby realizing control operation of the remote terminal on the sharing screen controllable area of the sending end.

In the embodiments of the present disclosure, corresponding remote control instruction is generated by the remote terminal to manipulate the sharing screen controllable area mapped on the remote terminal, and the remote control instruction is sent to the sending end. The sending end converts the remote control instruction into a local simulation control instruction, and executes the simulation control instruction to operate the sharing screen controllable area of the sending end, thereby realizing controllable operation of the remote terminal on the sharing screen controllable area of the sending end, and further restricting the controllable operation of the remote end on the display screen of the sending end within the sharing screen controllable area, which may not only realize the control operation of the remote terminal on the display screen of the sending end, but also guarantee the security of information outside the sharing screen controllable area of the sending end.

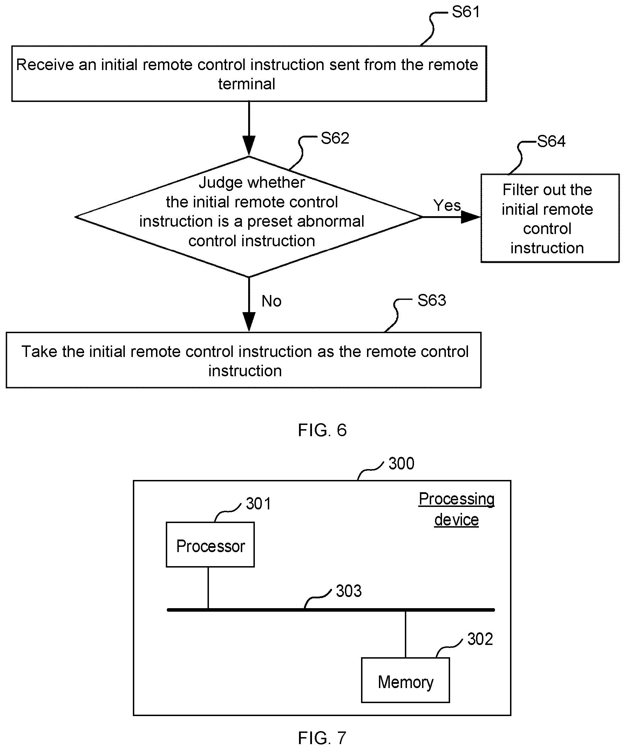

In an embodiment, please refer to FIG. 6, FIG. 6 is a third schematic sub-flowchart of a processing method for display screen remote sharing provided by the embodiments of the present disclosure. As shown in FIG. 6, in this embodiment, receiving the remote control instruction sent from the remote terminal includes steps S61 to S64.

In S61, an initial remote control instruction sent from the remote terminal is received. In S62, whether the initial remote control instruction is a preset abnormal control instruction is judged. In S63, if the initial remote control instruction is not preset abnormal control instruction, the initial remote control instruction is taken as the remote control instruction. In S64, if the initial remote control instruction is a preset abnormal control instruction, the initial remote control instruction is filtered out.

In an exemplary embodiment, the controllable operation of the remote terminal is restricted to avoid negative impacts on the sending end due to excessive authority of the controllable operation of the remote terminal. For example, shortcut key instructions for switching a screen and locking a screen sent from the remote terminal that have a greater impact on the sending end cannot be executed at the sending end. At the same time, operation instructions outside the sharing screen controllable area, for example, since the sharing screen controllable area is the subset of the screen sharing area, if the sharing screen controllable area is smaller than the screen sharing area, the area outside the sharing screen controllable area and within the screen sharing area is also not allowed to be controlled by the remote terminal, and the remote terminal cannot execute operation instructions for the above area. Based on this, an abnormal control instruction (i.e., preset abnormal control instruction) is set in advance to restrict the control operation of the remote terminal. The setting of preset abnormal control instruction may be carried out in the following two manners: 1) setting an instruction blacklist. The control instructions in the instruction blacklist will not be executed. If the remote control instruction sent from the remote terminal is an instruction in the instruction blacklist, the remote control instruction will not be executed. If the remote control instruction sent from the remote terminal is not an instruction in the instruction blacklist, the remote control instructions will be executed; 2) setting an instruction whitelist. The control instruction in the instruction whitelist will be executed. If the remote control instruction sent from the remote terminal is an instruction in the instruction whitelist, the remote control instruction will be executed. If the remote control instruction sent from the remote terminal is not an instruction in the instruction whitelist, the remote control instruction will not be executed.

Based on the settings of the above preset abnormal control instruction, after the remote terminal sends the initial remote control instruction, the sending end receives the initial remote control instruction and may judge whether the initial remote control instruction is a preset abnormal control instruction based on a preset instruction blacklist or a preset instruction whitelist, thereby verifying the validity of the initial remote control instruction. If the initial remote control instruction is not the preset abnormal control instruction, the initial remote control instruction is taken as the remote control instruction and the remote control instruction is executed. If the initial remote control instruction is the preset abnormal control instruction, the initial remote control instruction is filtered out and the initial remote control instruction is not executed.

In the embodiments of the present disclosure, the sending end verifies the validity of the remote control instruction sent from the remote terminal. If the remote control instruction sent from the remote terminal is valid, the remote control instruction will be executed. If the remote control instruction sent from the remote terminal is not valid, the remote control instruction sent from the remote terminal will not be executed, which may avoid excessive or abusive operation authority of the controllable operations of the remote terminal, and realize the restriction of the necessary control of the remote terminal on the sharing screen, thus further guaranteeing the security of the controllable operations of the display screen at the sending end and the security of the information.

In an exemplary embodiment, after the sharing screen controllable area corresponding to the second operation is determined, the processing method for display screen remote sharing further includes: in response to a third operation of the user to adjust the sharing screen controllable area, adjusting a size of the sharing screen controllable area; and/or, after the screen sharing area corresponding to the first operation is determined, the processing method for display screen remote sharing further includes: in response to a fourth operation of the user to adjust the screen sharing area, adjusting a size of the screen sharing area.

In an exemplary embodiment, after the screen sharing area or the sharing screen controllable area is determined, the user may adjust the size of the screen sharing area or the size of the sharing screen controllable area according to the actual needs of screen sharing. For example, by dragging the mouse, in response to the third operation of the user to adjust the sharing screen controllable area, the sharing screen controllable area may be enlarged or reduced, or in response to the fourth operation of the user to adjust the screen sharing area, the screen sharing area may be enlarged or reduced.

In the embodiments of the present disclosure, through the user to dynamically adjust the size of the screen sharing area or adjust the size of the sharing screen controllable area, it is possible to achieve sharing of the screen sharing area or control of the sharing screen controllable area by the remote terminal, while the security of information outside the screen sharing area or the security of information manipulation outside the sharing screen controllable area is guaranteed.

In an embodiment, after the screen sharing area corresponding to the first operation is determined, the processing method for display screen remote sharing further includes: in response to a fifth operation of the user to configure an authority for the screen sharing area, configuring a preset screen sharing authority for the screen sharing area, where the preset screen sharing authority is used to describe the authority of the remote terminal to share the screen sharing area.

In an exemplary embodiment, after the screen sharing area is determined, the user configures the preset screen sharing authority for the screen sharing area, so that the sending end configures the preset screen sharing authority for the screen sharing area in response to the fifth operation of the user to configure the authority for the screen sharing area, where the screen sharing authority is used to describe the authority of the remote terminal to share the screen sharing area, for example, whether a part of the plurality of remote terminals is allowed to share the screen sharing area, thereby whether the screen sharing area is shared with certain remote terminals is determined. In the embodiments of the present disclosure, the preset screen sharing authority for the screen sharing area is configured, the flexibility of sharing the screen sharing area with a plurality of terminals can be improved.

Please refer to FIG. 7, FIG. 7 is a structural schematic block diagram of a processing device for display screen remote sharing provided by the embodiments of the present disclosure.

As shown in FIG. 7, a processing device 300 for display screen remote sharing includes a processor 301 and a memory 302. The processor 301 and the memory 302 are connected via a bus 303. The bus 303 is for example, an I2C (Inter-integrated Circuit) bus.

In an exemplary embodiment, the processor 301 is configured to provide computing and control capabilities to support the operation of the entire processing device for display screen remote sharing. The processor 301 may be a Central Processing Unit (CPU). The processor 301 may also be other general-purpose processors, a digital signal processor (DSP), an application specific integrated circuit (ASIC), a field-programmable gate array (FPGA) or other programmable logic devices, a discrete gate or a transistor logic device, a discrete hardware component, etc. Herein, the general-purpose processor may be a microprocessor or any conventional processor, etc.

In an exemplary embodiment, the memory 302 may be a Flash chip, a read-only memory (ROM) disk, an optical disk, a USB flash drive, or a mobile hard disk.

Those skilled in the art will understand that the structure shown in FIG. 7 is merely a block diagram of a partial structure related to the solutions of the embodiments of the present disclosure, and does not constitute a limitation on the processing device for display screen remote sharing to which the solutions of the embodiments of the present disclosure are applied. The specific server may include more or fewer components than shown in the FIG. 7, or combine certain components, or have a different arrangement of components.

Herein, the processor is configured to run a computer program stored in the memory, and upon executing the computer program, implement any one of the processing methods for display screen remote sharing provided by the embodiments of the present disclosure.

In an embodiment, the processor is configured to run a computer program stored in a memory, and upon executing the computer program, implement the following steps: in response to a first operation of a user to select a display screen area, determining a screen sharing area corresponding to the first operation, where the screen sharing area is used to describe an area of a display screen shared by a sending end to a remote terminal, and the screen sharing area is a subset of the display screen of the sending end; collecting a substream corresponding to the screen sharing area according to the screen sharing area, where the substream is a screen sharing stream; and sending the substream to the remote terminal, so that the remote terminal displays the screen sharing area corresponding to the substream according to the substream.

In an embodiment, after determining the screen sharing area corresponding to the first operation, the processor is further configured to implement the following steps: in response to a second operation of the user to select a sub-area of the screen sharing area, determining a sharing screen controllable area corresponding to the second operation, where the sharing screen controllable area is used to describe an area where the remote terminal is capable of operating in the screen sharing area, and the sharing screen controllable area is a subset of the screen sharing area; configuring a preset screen control authority for the sharing screen controllable area, where the preset screen control authority is used to describe an authority of the sending end to allow the remote terminal to operate in the sharing screen controllable area.

In an embodiment, after determining the sharing screen controllable area corresponding to the second operation, the processor is further configured to implement the following steps: marking the sharing screen controllable area by using a preset marking manner.

In an embodiment, after configuring the preset screen control authority for the sharing screen controllable area, the processor is further configured to implement the following steps: granting a screen control authority of the sharing screen controllable area to the remote terminal, and mapping the sharing screen controllable area to the remote terminal.

In an embodiment, after mapping the sharing screen controllable area to the remote terminal, the processor is further configured to implement the following steps: receiving a remote control instruction from the remote terminal, where the remote control instruction is used to describe an instruction of the remote terminal to manipulate the sharing screen controllable area mapped on the remote terminal; converting the remote control instruction into a local simulation control instruction, and executing the simulation control instruction to operate the sharing screen controllable area of the sending end.

In an embodiment, when the receiving the remote control instruction sent from the remote terminal is implemented, the processor is configured to implement the following steps: receiving an initial remote control instruction sent from the remote terminal; judging whether the initial remote control instruction is a preset abnormal control instruction; in a case where the initial remote control instruction is not preset abnormal control instruction, taking the initial remote control instruction as the remote control instruction.

In an embodiment, after the determining the sharing screen controllable area corresponding to the second operation is implemented, the processor is further configured to implement the following steps: in response to a third operation of the user to adjust the sharing screen controllable area, adjusting a size of the sharing screen controllable area.

In an embodiment, after the determining the screen sharing area corresponding to the first operation is implemented, the processor is further configured to implement the following steps: in response to a fourth operation of the user to adjust the screen sharing area, adjusting a size of the screen sharing area.

It should be noted that those skilled in the art may clearly understand that for the convenience and simplicity of description, the specific working procedures of the processing device for display screen remote sharing described above may refer to the corresponding procedures in embodiments of the aforementioned processing method for display screen remote sharing, which will not be repeated herein.

The embodiments of the present disclosure further provide a storage medium for computer readable storage, where the storage medium stores one or more programs, and the one or more programs are executable by one or more processors to implement steps of any one of the processing methods for display screen remote sharing provided by the specification of the present disclosure.

Herein, the storage medium may be an internal storage unit of the processing device for display screen remote sharing described in the aforementioned embodiments, such as a hard disk or a memory of the processing device for display screen remote sharing. The storage medium may also be an external storage device of the processing device for display screen remote sharing, such as a plug-in hard disk, a smart media card (SMC), a secure digital (SD) card, a flash card, etc., equipped on the processing device for display screen remote sharing.

The present disclosure provides a processing method and processing device for display screen remote sharing and a storage medium. In this method, when a plurality of terminals share a display screen, the display screen of the sending end may be selected to obtain a screen sharing area, so that the display screen may be controllably divided into a screen sharing area and a non-screen sharing area, and the screen sharing area is mapped to the remote terminal for sharing, while the non-screen sharing area is not shared with the remote terminal, thereby capable of flexibly determining whether to share the entire display screen and the size of the sharing range, and further improving the flexibility of setting the screen sharing area, and realizing controllable and flexible remote sharing of a part of the display screen. Since the sending end may select a subset of the display screen as the screen sharing area and may not use the entire screen of the sending end as a sharing unit, so as to realize the restriction of the screen sharing area, thereby only sharing information on the screen sharing area and further only sharing necessary information, and guaranteeing the security of information outside the screen sharing area of the sending end.

The present disclosure provides a processing method and processing device for display screen remote sharing and a storage medium, which can solve the technical problem of information insecurity in display screen remote sharing in traditional technologies. In order to solve the technical problem of information insecurity in display screen remote sharing in traditional technologies, in this method, when a plurality of terminals share a display screen, a sending end selects a screen sharing area within the display screen, so that sending end controllably divides the display screen into a screen sharing area and a non-screen sharing area, and maps the screen sharing area to the remote terminal for sharing, while the non-screen sharing area is not shared with the remote terminal for sharing, thereby capable of flexibly determining whether to share the entire display screen and the size of the sharing range, and further, improving the flexibility of setting the screen sharing area and guaranteeing the security of information outside the screen sharing area of the sending end.

It may be understood by those skilled in the art that, all or some of the steps, the function modules/units in the system and the apparatus of the method disclosed above may be implemented as a software, a firmware, a hardware, and a suitable combination thereof. In a hardware embodiment, the division between functional modules/units mentioned in the above description does not necessarily correspond to the division of physical components; for example, a physical component may have a plurality of functions, or a function or step may be performed by several physical components in cooperation. Some or all of the physical components may be implemented as a software executed by a processor, such as a central processor, a digital signal processor or a microprocessor, or implemented as a hardware, or implemented as an integrated circuit, such as an application specific integrated circuit. Such software may be distributed on a computer readable medium, which may include a computer storage medium (or a non-transitory medium) and a communication medium (or a transitory medium). As well known to those skilled in the art, the term "computer storage medium" includes volatile and nonvolatile, removable and non-removable media implemented in any method or technology for storing information (e.g., computer readable instructions, data structures, program modules or other data). The computer storage medium includes, but is not limited to, RAM, ROM, EEPROM, flash or other memory technologies, CD-ROM, Digital Versatile Disk (DVD) or other optical disk storages, magnetic cassettes, tapes, disk storages or other magnetic storage means, or may be used to store desired information and any other media that may be accessed by a computer. In addition, it is well known to those skilled in the art that, a communication medium generally contains computer readable instructions, data structures, program modules or other data in a modulation data signal such as a carrier wave or other transmission mechanisms, and may include any information delivery medium.

It should be understood that the term "and/or" used in the specification of the present disclosure and the accompanying claims refers to any and all possible combinations of one or more of the associated listed items and includes these combinations. It should be noted that, in the present document, the terms "comprise", "contain" or any other variations thereof are intended to cover non-exclusive inclusion, so that a procedure, a method, an article or a system that includes a series of elements includes not only those elements, but also includes other elements not explicitly listed, or also includes elements inherent to such procedure, method, article or system. Without further limitations, the element limited by the statement "including a..." does not exclude the existence of other identical elements in the procedure, method, article, or system that includes that element.

The serial numbers of the above-mentioned embodiments of the present disclosure are only for description and do not represent the advantages or disadvantages of the embodiments. The foregoing descriptions are merely specific embodiments of the present disclosure, but the protection scope of the present disclosure is not limited thereto. Any person skilled in the art could readily conceive of various equivalent modifications or replacements within the technical scope of the present disclosure, and these modifications and substitutions shall all be included in the protection scope of the present disclosure. Therefore, the protection scope of the present disclosure shall be subject to the protection scope of the claims.

## Claims

1. A processing method for display screen remote sharing, **characterized by** comprising:
in response to a first operation of a user to select a display screen area, determining a screen sharing area corresponding to the first operation, wherein the screen sharing area is used to describe an area of a display screen and shared by a sending end to a remote terminal, and the screen sharing area is a subset of the display screen of the sending end;
collecting a substream corresponding to the screen sharing area according to the screen sharing area, wherein the substream is a screen sharing stream;
sending the substream to the remote terminal, so that the remote terminal displays the screen sharing area corresponding to the substream according to the substream.

2. The processing method for display screen remote sharing according to claim 1, wherein after the determining the screen sharing area corresponding to the first operation, the method further comprises:
in response to a second operation of the user to select a sub-area of the screen sharing area, determining a sharing screen controllable area corresponding to the second operation, wherein the sharing screen controllable area is used to describe an area where the remote terminal is capable of operating in the screen sharing area, and the sharing screen controllable area is a subset of the screen sharing area;
configuring a preset screen control authority for the sharing screen controllable area, wherein the preset screen control authority is used to describe an authority of the sending end to allow the remote terminal to operate in the sharing screen controllable area.

3. The processing method for display screen remote sharing according to claim 2, wherein after the determining the sharing screen controllable area corresponding to the second operation, the method further comprises:
marking the sharing screen controllable area by using a preset marking manner.

4. The processing method for display screen remote sharing according to claim 2 or 3, wherein after the configuring the preset screen control authority for the sharing screen controllable area, the method further comprises:
granting a screen control authority of the sharing screen controllable area to the remote terminal, and mapping the sharing screen controllable area to the remote terminal.

5. The processing method for display screen remote sharing according to claim 4, wherein after the mapping the sharing screen controllable area to the remote terminal, the method further comprises:
receiving a remote control instruction from the remote terminal, wherein the remote control instruction is used to describe an instruction for the remote terminal to manipulate a sharing screen controllable area mapped on the remote terminal;
converting the remote control instruction into a local simulation control instruction, and performing the simulation control instruction to operate the sharing screen controllable area of the sending end.

6. The processing method for display screen remote sharing according to claim 5, wherein the receiving the remote control instruction sent from the remote terminal comprises:
receiving an initial remote control instruction sent from the remote terminal;
judging whether the initial remote control instruction is a preset abnormal control instruction;
in a case where the initial remote control instruction is not the preset abnormal control instruction, taking the initial remote control instruction as the remote control instruction.

7. The processing method for display screen remote sharing according to claim 2, wherein after the determining the sharing screen controllable area corresponding to the second operation, the method further comprises:
in response to a third operation of the user to adjust the sharing screen controllable area, adjusting a size of the sharing screen controllable area.

8. The processing method for display screen remote sharing according to claim 1, wherein after the determining the screen sharing area corresponding to the first operation, the method further comprises:
in response to a fourth operation of the user to adjust the screen sharing area, adjusting a size of the screen sharing area.

9. A processing device for display screen remote sharing, **characterized by** comprising: a processor, a memory, a computer program stored on the memory and executable by the processor, and a data bus for realizing connection and communication between the processor and the memory, wherein when the computer program is executed by the processor, steps of the processing method for display screen remote sharing according to any one of claims 1 to 8 are implemented.

10. A storage medium for computer readable storage, **characterized in that** the storage medium stores one or more programs, and the one or more programs are executable by one or more processors to implement steps of the processing method for display screen remote sharing according to any one of claims 1 to 8.
